(19) Europäisches Patentamt
European Patent Office
Office européen des brevets

(11) Veröffentlichungsnummer: **0 010 580**
**B1**

# (12) EUROPÄISCHE PATENTSCHRIFT

(45) Veröffentlichungstag der Patentschrift: **29.09.82**

(51) Int. Cl.³: **C 07 C 149/437,** A 01 N 47/22

(21) Anmeldenummer: **79102908.5**

(22) Anmeldetag: **10.08.79**

## (54) 2-(1-Methyl-propin-2-yl-thio)-phenyl-N-methylcarbamat, ein Verfahren zu seiner Herstellung und seine Verwendung zur Bekämpfung von Schädlingen.

(30) Priorität: **28.08.78 DE 2837407**

(43) Veröffentlichungstag der Anmeldung:
**14.05.80 Patentblatt 80/10**

(45) Bekanntmachung des Hinweises auf die Patenterteilung:
**29.09.82 Patentblatt 82/39**

(84) Benannte Vertragsstaaten:
**AT BE CH DE FR GB IT LU NL SE**

(56) Entgegenhaltungen:
**DE-A-1 962 408**
**DE-B-1 148 107**
**DE-B-1 183 490**
**JOURNAL OF ECONOMIC ENTOMOLOGY, Band 57, Nr. 1, 1964 T.R. FUKUTO et al. «Charbamate Insecticides: Insecticidal Properties of Some Optically Active Substituted Phenyl N-Methylcarbamates» Seiten 10 bis 12**

(73) Patentinhaber: **BASF Aktiengesellschaft, Carl-Bosch-Strasse 38, D-6700 Ludwigshafen (DE)**

(72) Erfinder: **Loeffler, Hans-Peter, Dr. Dipl.-Chem., Defreggerstrasse 14, D-6700 Ludwigshafen (DE)**
Erfinder: **Kiehs, Karl, Dr. Dipl.-Chem., Sudetenstrasse 22, D-6840 Lampertheim (DE)**
Erfinder: **Adolphi, Heinrich, Dr. Dipl.-Biologe, Kalmitweg 11, D-6703 Limburgerhof (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# 2-(1-Methyl-propin-2-yl-thio)-phenyl-N-methylcarbamat, ein Verfahren zu seiner Herstellung und seine Verwendung zur Bekämpfung von Schädlingen

Die vorliegende Erfindung betrifft die Verbindung 2-(1-Methyl-propin-2-yl-thio)-phenyl-N-methylcarbamat, Schädlingsbekämpfungsmittel, die dieses Carbamat als Wirkstoff enthalten, sowie ein Verfahren zur Herstellung des Carbamats.

Carbamate des Thiobrenzcatechins, die insektizid wirksam sind, sind bekannt. So ist 2-sec.-Butylthiophenyl-N-methylcarbamat wirksam gegen Fliegen (J. Econ. Ent. 57, 10–12 (1964«, 2-Allylthiophenyl-N-methylcarbamat wird vorzugsweise zum Schutz von Materialien gegen Termiten verwendet (DE-AS-1 148 107), während 2-Propargylthiophenyl-N-methylcarbamat Raupen wirksam bekämpft (DE-AS-1 183 490).

Ausserdem ist aus der DE-OS-1 962 408 bekannt, dass 2-(1-Methyl-propin-2-yloxy)-phenyl-N-methylcarbamat besonders wirksam als Insektizid und Akarizid ist.

Es wurde gefunden, dass 2-(1-Methylpropin-2-yl-thio)-phenyl-N-methylcarbamat der Formel

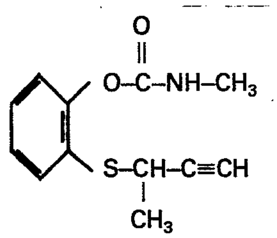

sehr gut wirksam gegen Schädlinge, beispielsweise Ektoparasiten, ist. Insbesondere zeigt das Carbamat eine sehr gute Wirkung gegen Zecken. Überraschenderweise ist es der analogen Sauerstoffverbindung (2-(1-Methyl-propin-2-yl-oxy)-phenyl-N-methylcarbamat (DE-PS-1 962 408) in ihrer Wirkung überlegen.

Weiterhin wurde gefunden, dass man 2-(1-Methylpropin-2-yl-thio)-phenyl-N-methylcarbamat durch Umsetzung von 2-(1-Methylpropin-2-yl-thio)-phenol mit Methylisocyanat gegebenenfalls in Gegenwart eines Katalysators und gegebenenfalls in Gegenwart eines inerten organischen Lösungs- oder Verdünnungsmittels erhält.

Die Umsetzung wird zweckmässigerweise in einem inerten organischen Lösungs- oder Verdünnungsmittel durchgeführt. Geeignet sind beispielsweise Äther, wie Diäthyläther, Dioxan, Tetrahydrofuran, aromatische Kohlenwasserstoffe, wie Benzol, Toluol, Xylole, und chlorierte aliphatische Kohlenwasserstoffe, wie Methylenchlorid. Auch Gemische dieser Lösungsmittel können verwendet werden.

Die Umsetzung kann gegebenenfalls durch die für die Reaktion von Isocyanaten mit Phenolen gebräuchlichen Katalysatoren, wie organische Amine, beispielsweise Trimethylamin, Triäthylamin, 1,4-Diazabicyclo[2,2,2]octan oder organische Zinnverbindungen, beispielsweise Di-n-butylzinndiacetat, Di-n-butylzinndichlorid, beschleunigt werden. Pro Mol 2-(1-Methyl-propin-2-yl-thio)-phenol werden zweckmässigerweise 0,0001 bis 0,1 Mol Katalysator zugegeben.

Die Umsetzung liefert gute Ausbeuten an 2-(1-Methyl-propin-2-yl-thio)-phenyl-N-methylcarbamat, wenn man die Ausgangsstoffe in äquimolarem Verhältnis einsetzt. Im allgemeinen werden die Mengenverhältnisse so gewählt, dass pro Mol 2-(1-Methyl-propin-2-yl-thio)-phenol 1 bis 2 Mole Methylisocyanat vorliegen.

Die Reaktionstemperatur kann im Bereich zwischen −10 und +100 °C variiert werden. Zweckmässigerweise arbeitet man bei Temperaturen zwischen Raumtemperatur und 75 °C.

Zur Herstellung des 2-(1-Methyl-propin-2-yl-thio)-phenols wird Monothiobrenzcatechin (J. Chem.Soc. 1953, S. 1514) mit 3-Chlor-butin-1 oder 3-Brombutin-1 umgesetzt. Die Umsetzung wird bevorzugt in Lösungsmitteln und in Anwesenheit äquimolarer Mengen einer Base durchgeführt. Als Lösungsmittel können beispielsweise Äther, wie Diäthyläther, Dioxan, Ketone wie Aceton, Methyläthylketon, Nitrile, wie Acetonitril, verwendet werden. Als Basen können organische Basen, wie Triäthylamin, oder anorganische Basen, wie Kaliumcarbonat, eingesetzt werden. Es empfiehlt sich, die Reaktion unter Ausschluss von Sauerstoff durchzuführen.

Das folgende Beispiel erläutert die Herstellung des 2-(1-Methyl-propin-2-yl-thio)-phenyl-N-methylcarbamats.

Beispiel 1

Zu 25,2 g 2-Mercaptophenol in 100 ml Acetonitril gibt man 21,2 g 3-Chlorbutin-1. Anschliessend tropft man unter Stickstoff 22 g Triäthylamin zu. Man rührt ca. 4 Stunden nach, engt das Reaktionsgemisch ein, nimmt in Chloroform auf, wäscht 3 mal mit je 100 ml Wasser, trocknet mit Natriumsulfat. Das Lösungsmittel wird entfernt, das Produkt bleibt zurück in Form eines brauen Öls. Ausbeute: 30 g.

Zu 0,08 Mol 2-(1-Methyl-propin-2-yl-thio)-phenol in 20 ml Diäthyläther gibt man 3 Tropfen Triäthylamin und anschliessend 0,12 Mol Methylisocyanat. Man lässt 24 Stunden stehen, entfernt das Lösungsmittel und überschüssiges Methylisocyanat und reinigt durch Chromatographie an Kieselgel mit Chloroform als Elutionsmittel. Nach Abziehen der Lösungsmittel erhält man 10 g (2-(1-Methyl-propin-2-yl-thio)-phenyl-N-methylcarbamat als gelbes Öl mit dem Brechungsindex

$n_D^{20} = 1,570.$

2-(1-Methyl-propin-2-yl-thio)-phenyl-N-methylcarbamat eignet sich zur Bekämpfung von Schädlingen der Klasse der Acarina.

Dazu gehören Ornithodorus moubata, Ornithodorus megnini, Argas reflexus, Argas persicus, Ixodes ricinus, Ixodes persuleatus, Amblyomma americanum, Amblyomma hebraeum, Amblyomma maculatum, Hyalomma savignyi, Hyalomma mauretanicum, Dermacentor silvarum, Dermacentor albipictus, Dermacentor andersoni, Haemaphysalis cinnabarina, Thipcephalus sanguineus, Boophilus microplus, Boophilus annulatus, Tetranychus telarius, Tetranychus atlanticus, Tetranychus pacificus, Paratetranychus pilosus, Bryobia praetiosa.

Der Wirkstoff kann als solcher, in Form von Formulierungen oder den daraus bereiteten Anwendungsmöglichkeiten, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Giessen angewendet werden. Die Anwendungsformen richten sich ganz nach den Verwendungszwecken; sie sollten in jedem Fall möglichst die feinste Verteilung des erfindungsgemässen Wirkstoffs gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle, sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser in Betracht.

Wässrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können der Wirkstoff als solcher oder in einem Öl oder Lösungsmittel gelöst mittels Netz-, Haft-, Dispergier- oder Emulgiermittel in Wasser homogenisiert werden. Es können aber auch Wirkstoffsubstanzen, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylenoctylphenoläther, äthoxyliertes Isooctylphenol, Octylphenol, Nonylphenon, Alkylphenolpolyglykoläther, Tributylphenylpolyglykoläther, Alkylarylpolyätheralkohole, Isotridecylalkohol, Fettalkoholäthylenoxid-Kondensate, äthoxyliertes Rinizusöl, Polyoxyäthylenalkyläther, äthoxyliertes Polyoxypropylen, Laurylalkoholpolyglykolätheracetal, Sorbitester, Lignin, Sulfitablaugen und Methylcellulose in Betracht.

Pulver-, Streu- und Stäubemittel können durch Mischen oder gemeinsames Vermahlen der Wirkstoffe mit einem festen Trägerstoff hergestellt werden.

Granulate, z.B. Umhüllungs-, Imprägnierungs- und Homogengranulate, können durch Bindung des Wirkstoffs an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löss, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver.

Die Formulierungen enthalten im allgemeinen zwischen 0,1 und 95 Gewichtsprozent Wirkstoff, vorzugsweise zwischen 0,5 und 90 Gewichtsprozent.

Die Wirkstoffkonzentrationen in den anwendungsfertigen Zubereitungen können in grösseren Bereichen variiert werden. Im allgemeinen liegen sie zwischen 0,0001 und 10%, vorzugsweise zwischen 0,01 und 1%.

Der Wirkstoff kann auch mit gutem Erfolg im Ultra-Low-Volume-Verfahren (ULV) verwendet werden, wobei es möglich ist, Formulierungen mit über 95 Gewichtsprozent Wirkstoff oder sogar den 100 prozentigen Wirkstoff allein auszubringen.

Beispiele für Formulierungen sind:

I. 3 Gewichtsteile 2-(1-Methyl-propin-2-yl-thio)-phenyl-N-methylcarbamat werden mit 97 Gewichtsteilen feinteiligem Kaolin innig vermischt. Man erhält auf diese Weise ein Stäubemittel, das 3 Gewichtsprozent des Wirkstoffs enthält.

II. 30 Gewichtsteile 2-(1-Methyl-propin-2-yl-thio)-phenyl-N-methylcarbamat werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 20 Gewichtsteile 2-(1-Methyl-propin-2-yl-thio)-phenyl-N-methylcarbamat werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoäthanolamid, 5 Gewichtsteilen Calciumsalz der Doedecylbenzolsulfonsäure und 5 Gewichts teilen des Anlagerungsproduktes von 40 Mol Äthylenoxid an 1 Mol Ricinusöl besteht. Durch Ausgiessen und feines Verteilen der Lösung in 100 000 Gewichtsteilen Wasser erhält man eine wässrige Dispersion, die 0,02 Gewichtsprozent des Wirkstoffs enthält.

Zu dem Wirkstoff können Öle verschiedenen Typs, Herbizide, Fungizide, andere Insektizide, Bakterizide, gegebenenfalls auch erst unmittelbar vor der Anwendung (Tankmix), zugesetzt werden. Diese Mittel können im Gewichtsverhältnis 1:10 bis 10:1 zugemischt werden.

Beispielsweise können folgende Mittel zugemischt werden: 1,2-Dibrom-3-chlorpropan, 1,3-Dichlorpropen, 1,3-Dichlorpropen + 1,2-Dichlorpropan, 1,2-Dibrom-äthan, 2-sec.-Butyl-phenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methyl-carbamat, 4-Dimethylamino-3,5-xylyl-N-methylcarbamat, 2-(1,3-Dioxolan-2-yl)-phenyl-N-methylcarbamat, 1-Naphthal-N-methylcarbamat, 2,3-Dihydro-2,2-dimethyl-benzofuran-7-yl-N-methyl-carbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)-oxy]-thio-acetimidat, Methyl-N',N'-dimethyl-N-[(methylcarbamoyl)oxy]-1-thiooxamidat, N-(2-Methyl-4-chlor-phenyl)-N',N'-dimethylformamidin, Tetrachlorthiophen, O,O-Dimethyl-O-(p-nitrophenyl)-phosphorthioat, O,O-Diäthyl-O-(p-nitrophenyl)-phosphorthioat, O-Äthyl-O-(p-nitrophenyl)-phenyl-phosphonothioat, O,O-Dimethyl-O-(3-methyl-4-nitrophenyl)-phosphorthioat, O,O-Diäthyl-O-(2,4-dichlorphenyl)-phosphorthioat, O-Äthyl-O-(2,4-dichlorphenyl)-phenyl-phosphonothioat, O,O-Dimethyl-O-(2,4,5-trichlorphenyl)-phosphorthioat, O-Äthyl-O-(2,4,5-trichlorphenyl)-äthyl-phosphonothioat, O,O-Dimethyl-O-(4-brom-2,5-dichlorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphor-thioat, O-Äthyl-O-(3-methyl-4-methylthiophenyl)-isopropyl-phosphoramidat, O,O-Diäthyl-O-[p-(methylsulfinyl)phenyl]-phosphorthioat, O-Äthyl-S-phenyl-äthyl-phosphonodithioat, O,O-Diäthyl-[2-chlor-1-(2,4-dichlorphenyl-vinyl]-phosphat, O,O-Dimethyl-[2-chlor-1-(2,4,5-trichlorphenyl)]-vinylphosphat, O,O-Dimethyl-S-(1-phenyl)-äthylacetat-phosphordithioat, Bis-(dimethylamino)-fluorphosphinoxid, Octamethyl-pyrophosphoramid, O,O,O,O-Tetraäthyldithio-pyrophosphat, S-Chlormethyl-O,O-diäthyl-phosphordithioat, O-Äthyl-S,S-dipropyl-phosphordithioat, O,O-Dimethyl-O-2,2-dichlorvinyl-phosphat, O,O-Dimethyl-1,2-dibrom-2,2-dichloräthylphosphat, O,O-Dimethyl-2,2,2-trichlor-1-hydroxy-äthylphosphonat, O,O-Dimethyl-S-[1,2-biscarbäthoxy-äthyl-(1)-phosphordithioat, O,O-Dimethyl-O-(1-methyl-2-carbmethoxy-vinyl)-phosphat, O,O-Dimethyl-S-(N-methyl-carbamoyl-methyl)-phosphordithioate, O,O-Dimethyl-S-(N-methyl-carbamoyl-methyl-phosphorthioate, O,O-Dimethyl-S-CN-methoxyäthyl-carbamoyl-methyl)-phosphordithioat, O,O-Dimethyl-S-(N-formyl-N-methylcarbamoylmethyl-phosphordithioat, O,O-Dimethyl-O-[1-methyl-2-(methyl-carbamoyl)-vinyl]-phosphat, O,O-Dimethyl-O-[(1-methyl-2-dimethylcarbamoyl)-vinyl]-phosphat, O,O-Dimethyl-O-[(1-methyl-2-chlor-2-diäthylcarbamoyl)-vinyl]-phosphat, O,O-Diäthyl-S-(äthylthio-methyl)-phosphoridithioat, O,O-Diäthyl-S-[(p-Chlorphenylthio]-methyl-phosphordithioat, O,O-Dimethyl-S-(2-äthylthioäthyl)-phosphorthioat, O,O-Dimethyl-S-(2-äthylthio-äthyl)-phosphordithioat, O,O-Dimethyl-S-(2-äthylsulphinyl-äthyl)-phosphorthioat, O,O-Diäthyl-S-(2-äthylthio-äthyl)-phosphordithioat, O,O-Dimethyl-S-(2-äthylsulphinyl-öthyl)-phosphorthioat, O,O-Diäthylthiophosphoryliminophenyl-acetonitril, O,O-Diäthyl-S-(2-chlor-1-phthalimidoäthyl)-phosphordithioat, O,O-Diäthyl-S-[6-chlor-benzoxazolon-(2)-yl(3)]-methyldithiophosphat, O,O-Dimethyl-S-[(2-methoxy-1,3,4-thiodiazol-5-onyl(4)-methyl]-phosphordithioat, O,O-Diäthyl-O-[3,5,6-trichlor-pyridyl-(2)]-phosphorthioat, O,O-Diäthyl-O-(2-pyrazinyl)-phosphorthioat, O,O-Diäthyl-O-[2-isopropyl-4-methyl-pyrimidinyl(6)]-phosphorthioat, O,O-Diäthyl-O-[2-(diäthylamino)-6-methyl-4-pyrimidinyl]-thionophosphat, O,O-Dimethyl-S-(4-oxo-1,2,3-benzotriazin-3-yl-methyl)-phosphordithioat, O,O-Dimethyl-S-[(4,6-diamino-1,3,5-triazin-2-yl) methyl]-phosphordithioat, O,O-Diäthyl-(1-phenyl-1,2,4-triazol-3-yl)-thionophosphat, O,S-Dimethyl-phosphor-amido-thioat, O,S-Dimethyl-N-acetyl-phosphoramidothioat, γ-Hexachlorcyclohexan, 1,1-Di-(p-methoxyphenyl)-2,2,2-trichlor-äthan, 6,7,8,9,10,10-Hexachloro-1,5,6a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis,trans-chrysanthemat, 5-Benzyl-furyl-(3)-methyl-DL-cis, trans-chrysanthemat, 3-Phenoxybenzyl(±)-cis, trans-2,2-dimethyl-3-(2,2-dichlorvinyl)-cyclopropancarboxylat, α-Cyano-3-phenoxybenzyl(±)-cis,trans-2,2-dimethyl-3-(2,2-dichlorvinyl)-cyclopropancarboxylat, (s)-α-Cyano-3-phenoxybenzyl-cis(IR,3R)-2,2-dimethyl-3-(2,2-dibromvinyl)-cyclopropancarboxylat, 3,4,5,6-Tetrahydrophthalimidoäthyl-DL-cis,trans-chrysanthemat, 2-Methyl-5-(2-propinyl)-3-furylmethyl-chrysanthemat, α-Cyano-3-phenoxybenzyl-α-isopropyl-4-chlorphenylacetat.

Beispiel 2

Kontaktwirkung auf Zecken (Ornithodorus moubata)

Geprüft wird mit Zecken im dritten Larvenstadium. Dazu taucht man die Tiere, die sich in einem Papierbeutel befinden, für 3 Sekunden in die Prüfemulsion. Die Beutel werden frei aufgehängt. Nach 48 Stunden wird die Wirkung auf die Zecken beurteilt.

Vergleichsmittel ist 2-(1-Methyl-propin-2-yl-oxy)-phenyl-N-methylcarbamat (DE-OS-1 962 408).

| Wirkstoff | Wirkstoffkonzentration der Prüfemulsion [%] | Mortalitätsrate [%] |
|---|---|---|
| Erfindungsgemässer | 0,005 | 100 |
| Wirkstoff | 0,0025 | 80 |
| Vergleichsmittel | 0,01 | 100 |
| | 0,005 | 80 |

**Patentansprüche**
für die Vertragsstaaten BE, CH, DE, FR, GB, IT, LU, NL, SE

1. 2-(1-Methyl-propin-2-yl-thio)-phenyl-N-methylcarbamat der Formel

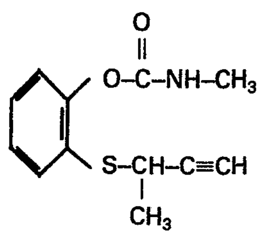

2. Verfahren zur Herstellung von 2-(1-Methyl-propin-2-yl-thio)-phenyl-N-methylcarbamat, dadurch gekennzeichnet, dass man 2-(1-Methyl-propin-2-yl-thio)-phenol gegebenenfalls in Gegenwart eines Katalysators und gegebenenfalls in Gegenwart eines inerten organischen Lösungs- oder Verdünnungsmittels mit Methylisocyanat umsetzt.

3. Mittel zur Bekämpfung von Schädlingen der Klasse der Acarina, enthaltend einen festen oder flüssigen Trägerstoff und 2-(1-Methyl-propin-2-yl-thio)-phenyl-N-methylcarbamat.

4. Verfahren zur Bekämpfung von Schädlingen der Klasse der Acarina, dadurch gekennzeichnet, dass man 2-(1-Methyl-propin-2-yl-thio)-phenyl-N-methylcarbamat auf die Schädlinge bzw. deren Lebensraum einwirken lässt.

**Patentansprüche**
für den Vertragsstaat: AT

1. Mittel zur Bekämpfung von Schädlingen aus der Klasse der Acarina, enthaltend einen festen oder flüssigen Trägerstoff und 2-(1-Methyl-propin-2-yl-thio)-phenyl-N-methyl-carbamat.

2. Verfahren zur Herstellung von 2-(1-Methyl-propin-2-yl-thio)-phenyl-N-methylcarbamat, dadurch gekennzeichnet, dass man 2-(1-Methyl-propin-2-yl-thio)-phenol gegebenenfalls in Gegenwart eines Katalysators und gegebenenfalls in Gegenwart eines inerten organischen Lösungs- oder Verdünnungsmittels mit Methylisocyanat umsetzt.

**Revendications**
pour les Etats contractants: BE, CH, DE, FR, GB, IT, LU, NL, SE

1. 2-(1-méthyl-propyn-2-yl-thio)-phényl-N-méthylcarbamate de formule

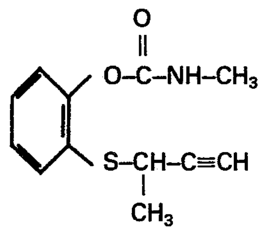

2. Procédé de préparation de 2-(1-méthyl-propyn-2-yl-thio)-phényl-N-méthylcarbamate, caractérisé par le fait que l'on fait réagir du 2-(1-méthyl-propyn-2-yl-thio)-phénol avec de l'isocyanate de méthyle, éventuellement en présence d'un catalyseur et éventuellement en présence d'un solvant ou diluant organique inerte.

3. Produits pour combattre les parasites de la classe des acariens, contenant un support solide ou liquide et du 2-(1-méthyl-propyn-2-yl-thio)-phényl-N-méthylcarbamate.

4. Procédé pour combattre les parasites de la classe des acariens, caractérisé par le fait que l'on fait agir sur les parasites ou leur biotope du 2-(1-méthyl-propyn-2-yl-thio)-phényl-N-méthylcarbamate.

**Revendications**
pour l'Etat contractant: AT

1. Produits pour combattre les parasites de la classe des acariens, contenant un support solide ou liquide et du 2-(1-méthyl-propyn-2-yl-thio)-phényl-N-méthylcarbamate.

2. Procédé de préparation de 2-(1-méthyl-propyn-2-yl-thio)-phényl-N-méthylcarbamate, caractérisé par le fait que l'on fait réagir du 2-(1-méthyl-propyn-2-yl-thio)-phénol avec de l'isocyanate de méthyle, éventuellement en présence d'un catalyseur et éventuellement en présence d'un solvant ou diluant organique inerte.

**Claims**
for the Contracting States: BE, CH, DE, FR, GB, IT, LU, NL, SE

1. 2-(1-methylpropyn-2-yl-thio)-phenyl-N-methylcarbamate of the formula

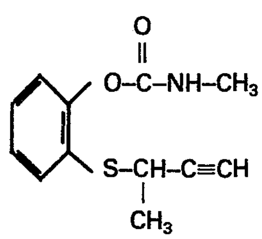

2. A process for the production of 2-(1-methylpropyn-2-yl-thio)-phenyl-N-methylcarbamate, characterized in that 2-(1-methylpropyn-2-yl-thio)-phenol is reacted with methyl isocyanate in the presence or absence of a catalyst and in the presence or absence of an inert organic solvent or diluent.

3. An agent for combating pests of the Acarina order, containing a solid or liquid carrier and 2-(1-methylpropyn-2-yl-thio)-phenyl-N-methylcarbamate.

4. A process for combating pests of the Acarina order, characterized in that 2-(1-methylpropyn-2-yl-thio)-phenyl-N-methylcarbamate is allowed to act on the pests or their habitat.

**Claims**

for the Contracting State: AT

1. An agent for combating pests of the Acarina order, containing a solid or liquid carrier and 2-(1-methylpropyn-2-yl-thio)-phenyl-N-methylcarbamate.

2. A process for the production of 2-(1-methylpropyn-2-yl-thio)-phenyl-N-methylcarbamate, characterized in that 2-(1-methylpropyn-2-yl-thio)-phenol is reacted with methyl isocyanate in the presence or absence of a catalyst and in the presence or absence of an inert organic solvent or diluent.